# FASCICULE DE BREVET EUROPEEN

(11) **EP 1 188 647 B1**
(45) Date de publication et mention de la délivrance du brevet: **16.03.2005**
(21) Numéro de dépôt: 01402338.6
(22) Date de dépôt: 11.09.2001
(51) Int. Cl.: B62D 25/12, E05D 3/06, E05C 19/00

(54) **Dispositif de verrouillage pour capot de véhicule automobile**
Verriegelungsvorrichtung für Kraftfahrzeugmotorhauben
Locking device for vehicle hood

(30) Priorité: 13.09.2000 FR 0011676
(43) Date de publication de la demande: 20.03.2002
(73) Titulaire: PEGUFORM FRANCE, 27950 Saint Marcel (FR)
(72) Inventeur: Brogly, Sébastien, 27950 St. Just (FR); George, Ghislain, 27200 Vernon (FR); Renault, Thierry, 27200 Vernon (FR)
(74) Mandataire: Le Forestier, Eric

(56) Documents cités:
- DE-A- 19 846 644
- DE-C- 4 240 790
- US-A- 5 101 921

## Description

La présente invention concerne les systèmes de fermeture pour un capot de véhicule automobile selon le préambule de la revendication 1 (voir DE-E-4 240 790).

Actuellement, on connaît des véhicules dans lesquels le capot de la face avant pivote par rapport à la structure du véhicule à l'aide de charnières situées en partie arrière du capot du côté de la baie de pare-brise. Le système de verrouillage du capot au châssis est unique et s'étend en position centrale avant, ou bien est double et s'étend en position latérale symétrique avant. Ce système est généralement composé d'une serrure reliant le capot à la structure du véhicule. Cette liaison à la structure crée une zone rigide à l'avant du véhicule qui, lors d'un choc frontal avec un piéton, peut provoquer chez ce dernier un traumatisme à la hanche pour un adulte ou un traumatisme à la tête dans le cas d'un enfant.

Un des buts de la présente invention est de fournir un système de fermeture de capot de face avant de véhicule automobile qui permette de réduire le préjudice en cas de choc avec un piéton.

Pour atteindre ce but, on prévoit, selon la présente invention, un capot de véhicule comprenant une paroi, des moyens de liaison fixés à la paroi en vue de monter le capot mobile sur un châssis de véhicule, ces moyens de liaison s'étendant plus près d'un même bord arrière de la paroi que des autres bords de la paroi, ainsi qu'un organe de verrouillage fixé à la paroi en vue de verrouiller le capot en position fermée au châssis, l'organe de verrouillage s'étendant plus près du bord arrière que du bord avant de la paroi opposée au bord arrière.

Ainsi, la zone rigide due à l'organe verrouillage est rejetée en arrière du coté des moyens de liaison laissant le côté opposé avant exempt de zone rigide, donc plus facilement déformable. Cette plus grande déformabilité permet de réduire le préjudice en cas de choc avec un piéton.

Avantageusement, L'organe de verrouillage s'étend à égale distance des deux bords latéraux du capot.

Avantageusement, les moyens de liaison comprennent des charnières.

Ainsi, le capot est monté mobile à rotation sur le châssis.

Avantageusement, les moyens de liaison comprennent des glissières.

Ainsi, le capot est monté mobile à translation sur le châssis.

Avantageusement, le capot comporte des moyens de sécurisation de la position fermée.

Avantageusement, les moyens de sécurisation s'étendent plus près d'un bord de la paroi opposé à celui des moyens de liaison et de l'organe de verrouillage.

Avantageusement, les moyens de sécurisation comprennent un crochet apte à venir s'engager librement dans le châssis.

On prévoit aussi un véhicule comportant un capot de véhicule conforme à la présente l'invention.

On prévoit aussi un véhicule comprenant un châssis et un capot comportant une paroi, des moyens de liaison fixés à la paroi et au châssis pour rendre le capot mobile sur le châssis, les moyens de liaison s'étendant plus près d'un même bord arrière de la paroi que des autres bords de la paroi, et un organe de verrouillage fixé à la paroi en vue de verrouiller le capot en position fermée au châssis et s'étendant plus près du bord arrière que d'un bord avant de la paroi opposée au bord arrière.

Avantageusement, l'organe de verrouillage comporte une serrure apte à être liée au châssis.

Avantageusement, l'organe de verrouillage comporte un câble lié au capot.

Avantageusement, le capot est monté mobile au châssis selon un mouvement décomposable en une translation et une rotation.

Avantageusement, le capot comporte au moins un pion apte à venir coopérer avec un orifice ménagé dans un bossage s'étendant en saillie d'une aile du véhicule.

On prévoit aussi, selon l'invention, un capot de véhicule comprenant une paroi, des moyens de liaison fixés à la paroi en vue de monter le capot mobile sur un châssis de véhicule, ces moyens de liaison s'étendant plus près d'un même premier bord de la paroi que des autres bords de la paroi, ainsi qu'un organe de verrouillage fixé à la paroi en vue de verrouiller le capot en position fermée au châssis, l'organe de verrouillage s'étendant plus près du premier bord que d'un bord de la paroi opposée au premier bord.

D'autres caractéristiques et avantages de l'invention apparaîtront lors de la description ci-après d'un mode préféré de réalisation de la présente invention donné à titre d'exemple non limitatif.
La figure 1 est une vue partielle en trois dimensions d'une face avant de véhicule ;
La figure 2 est une vue de profil des moyens de liaison entre le capot et le châssis du véhicule de la figure 1 ;
Les figures 3a,b et c sont des vues partielles en trois dimensions de la face avant du véhicule de la figure 1 montrant les étapes de fermeture du capot ; et,
La figure 4 est une vue schématique des moyens de sécurisation de la fermeture du capot du véhicule de la figure 1.

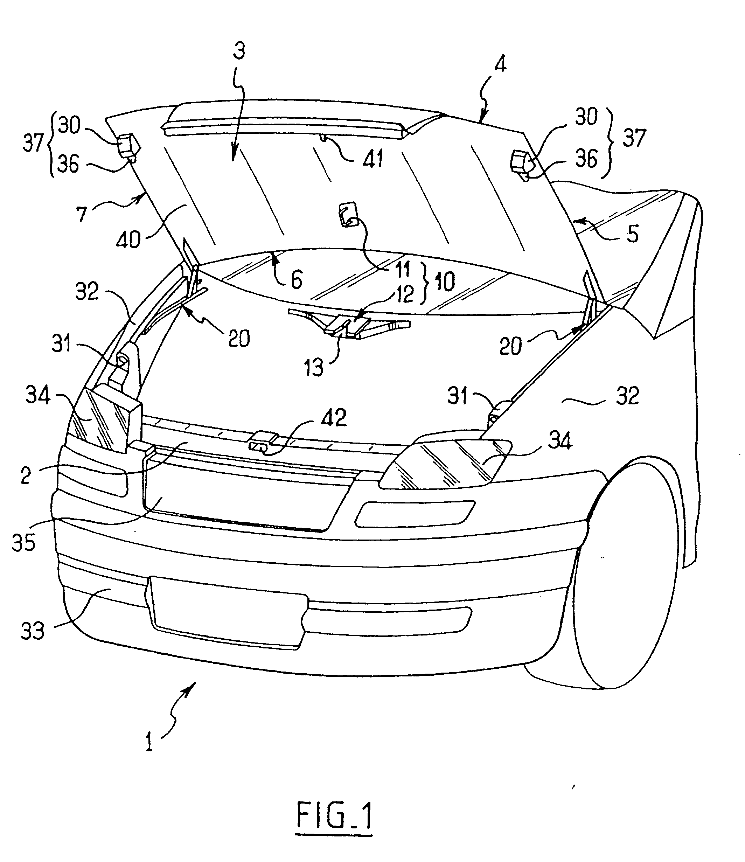

En référence à la figure 1, la face avant 1 du véhicule selon le présent mode de réalisation comprend une robe comportant un bouclier 33, une calandre 35, deux ailes 32, deux blocs d'optiques 34 situés en extrémité avant des ailes 32, de part et d'autre de la calandre 35, et un capot 3, l'ensemble de la robe habillant un châssis dont une partie 2 seulement est représentée.

Le capot 3 comporte une paroi 40 délimitée par des bords avant 4 plutôt convexe, droit 5 plutôt droit, arrière 6 plutôt concave et gauche 7 plutôt droit.

A proximité du bord arrière 6, le véhicule comporte un organe de verrouillage 10. Cet organe comprend une serrure 12 qui est apte à être liée à une partie non représentée du châssis du véhicule et qui comporte une encoche 13 de réception évasée à son extrémité avant et borgne à son extrémité arrière. L'organe 10 de verrouillage comprend en outre une boucle 11 s'étendant en saillie de la face interne de la paroi 40 du capot 3 et liée à cette paroi 40. La boucle 11 est apte à être reçue par la serrure 12 dans son encoche 13 lors de la fermeture puis du verrouillage du capot 3 en position fermée. D'autre part, l'organe 10 de verrouillage comprend un câble connu en soi, non représenté, commandable depuis l'habitacle du véhicule qui permet le déverrouillage du capot 3 lorsque celui-ci est verrouillé en position fermée : ce câble permet de libérer la boucle 11 de la serrure 12 en vue de l'ouverture du capot.

Le capot 3 comporte une paire de pions 37 s'étendant de part et d'autre de la paroi 40 de manière latérale et symétrique à proximité du bord avant 4 et respectivement à proximité des bords droit 5 et gauche 7, et dont le corps 30 respectif s'étend en saillie de la face inférieure de la paroi 40. A partir des corps 30, un plot 36 de section circulaire s'étend en saillie vers le bord arrière 6 parallèlement à la paroi 40 du capot 3. Les plots 36 sont aptes à s'engager dans des orifices ménagés dans des faces avant de bossages 31 respectifs s'étendant en saillie de la partie interne des ailes 32 respectives.

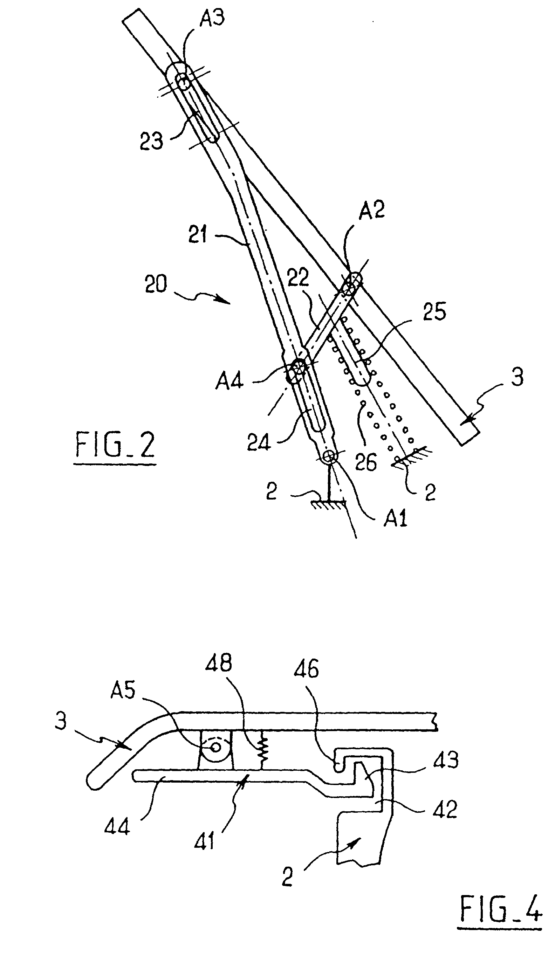

Le capot 3 comporte des moyens de liaison 20 aptes à le relier au châssis du véhicule tout en permettant une mobilité par rapport à ce dernier. Ces moyens de liaison 20 s'étendent respectivement à proximité des bords droit 5 et gauche 7 de la paroi 40, tout en restant à proximité du bord arrière 6. Il est à noter que la figure 1 ne présente pas les moyens de liaison 20 complètement montés sur le capot 3, au contraire de la figure 2.

En référence à la figure 2, chacun des moyens de liaison 20 comprend deux bras 21 et 22. Le bras 21 est monté mobile à rotation autour d'un axe A1 sur le châssis du véhicule, l'axe A1 ayant une direction horizontale et perpendiculaire à la direction de marche du véhicule. Une partie arrière du bras 21 comporte une lumière 24 apte à recevoir à coulissement un axe A4, parallèle à l'axe A1. Le bras 21 comporte une seconde partie qui prolonge la première partie vers l'avant selon un angle α Cette seconde partie comporte une lumière 23 apte à recevoir à coulissement un axe A3, parallèle aux axes A1 et A4, qui est solidaire du capot 3. Le bras 22 est lié solidairement à l'une de ses extrémités à l'axe A4. A son autre extrémité, il comporte un second axe A2, parallèle aux axes A1, A3 et A4, qui lie le bras 22 au capot 3 par un montage mobile à rotation autour de l'axe A2. Le bras 22 comprend en outre un support 25 s'étendant en saillie vers l'arrière du coté de l'axe A1 quand le bras 22 est monté dans l'ensemble des moyens de liaison 20. Le support 25 est monté solidaire du bras 22 et est apte à recevoir un ressort 26 dont l'extrémité arrière est liée solidairement au châssis du véhicule et l'extrémité avant est en appui sur le bras 22. Le ressort 26 est ici un ressort à boudins. Dans un autre mode de réalisation non représenté, le support 25 est monté mobile à rotation par rapport au bras 22 autour d'un axe qui est parallèle à l'un des axes A2, A4.

En référence à la figure 4, le véhicule comprend des moyens de sécurisation 41,42. Ces moyens de sécurisation comprennent un logement 42 qui est aménagé dans la partie avant 2 du châssis du véhicule au-dessus de la calandre 35. L'ouverture du logement 42 est en partie refermée à partir du dessus par une languette 46. D'autre part, les moyens de sécurisation comprennent un loquet 41 comprenant en partie arrière un crochet 43 qui est apte à être reçu librement dans le logement 42 à travers son ouverture, ainsi qu'un bras de manipulation avant 44. Le loquet 41 est monté sur le capot 3 mobile à rotation autour d'un axe A5, l'axe ayant une direction horizontale et perpendiculaire à la direction de marche du véhicule et s étendant entre le bras 44 et le crochet 43. Un ressort de rappel 48 relie le loquet 41 et le capot 3 de manière à ce que le crochet 43, libre de toute manipulation, soit le plus près possible de la paroi du capot 3.

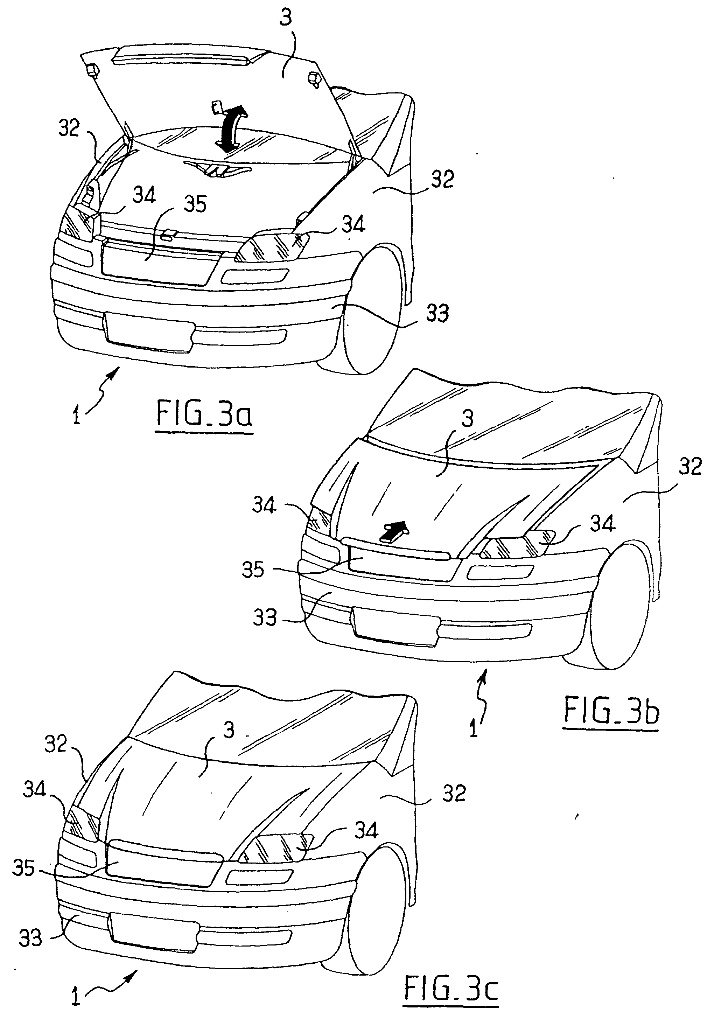

En référence aux figures 3a à 3c, on suppose que le capot 3 est relevé en position ouverte comme illustré à la figure 3a. Les axes A3 et A4 sont à l'extrémité la plus éloigné de l'axe A1 des lumières respectives 23 et 24, et ce, sous la poussé qui est exercée par le ressort 26 sur son support 25 relié au bras 22. Les moyens de liaison 20 sont donc tels qu'illustrés à la figure 2. Sous l'action de l'opérateur, la fermeture du capot commence par une rotation vers le bas autour de l'axe A1 des moyens de liaisons 20, rotation jusqu'à ce que le capot 3 atteigne la position de la figure 3b. Les axes A3 et A4 restent alors situés à la même position au sein de leurs lumières respectives, sous la poussé du ressort 26. D'autre part, la boucle 11 se trouve alors devant l'encoche 13 de la serrure 12. De même, le crochet 43 du loquet 41 se trouve devant l'ouverture du logement 42 de manière non engagée.

Sous l'action de l'opérateur, la fermeture se poursuit alors par une translation du capot suivant une direction légèrement relevée par rapport à l'horizontale et en direction de l'arrière du véhicule. Les axes A3 et A4 coulissent dans leurs lumières respectives 23,24 vers les extrémités arrières de ces dernières. Le mouvement de translation va :
- comprimer les ressorts 26 ;
- engager librement le crochet 43 du loquet 41 dans le logement 42, le ressort 48 assurant que le crochet 43 se relève bien derrière la languette 46 ;
- engager la boucle 11 dans l'encoche 13 de la serrure 12, jusqu'à ce que le verrouillage de la serrure 12 s'enclenche.
- Engager chacun des plots 36 dans l'ouverture des bossages 31 respectifs des ailes 32 respectives.

Le capot 3 se trouve donc en position fermée verrouillée comme cela est illustré par la figure 3c.

Inversement, on suppose que le capot est en position fermée verrouillée comme illustré à la figure 3c. L'action du câble de déverrouillage désactive le verrouillage de la serrure 12, libérant la boucle 11. Sous l'action de la poussé des ressorts 26, le capot commence un mouvement de translation suivant une direction légèrement rabaissée par rapport à l'horizontale et en direction de l'avant du véhicule, puis le crochet 43 vient en butée sur la languette 46. Par action de l'opérateur sur le bras 44 du loquet 41, le crochet 43 est ensuite libéré et se désengage du logement 42. Le mouvement de translation du capot se poursuit sous la poussée du ressort 26. La boucle 11 se désengage de l'encoche 13 de la serrure 12, les plots 36 se désengagent des ouvertures des bossages 31. Le mouvement de translation s'interrompt lorsque les axes A3 et A4 viennent buter dans les extrémités avant des lumières respectives 23,24. La position du capot à ce moment est illustrée par la figure 3b. Ensuite, un mouvement de rotation effectué par l'opérateur vers le haut autour de l'axe A1 permet de relever le capot en position ouverte.

Bien entendu, on pourra apporter à la présente invention de nombreuses modifications sans sortir du cadre de celle-ci.

Notamment, les moyens de liaison peuvent être des charnières ne permettant qu'un montage du capot mobile à rotation selon un seul axe sur le châssis.

Le ressort de rappel du loquet de sécurisation peut être un ressort de traction ou bien un ressort de torsion monté sur l'axe.

Le loquet peut être fixé solidairement au capot à son extrémité opposée au crochet, le corps du loquet servant de ressort de rappel.

## Revendications

1. Capot (3) de véhicule comprenant une paroi (40), des moyens de liaison (20) fixés à la paroi en vue de monter le capot mobile sur un châssis (2) de véhicule et s'étendant plus près d'un même bord arrière (6) de la paroi que des autres bords (4,5,7) de la paroi, et un organe (10) de verrouillage fixé à la paroi en vue de verrouiller le capot en position fermée au châssis, **caractérisé en ce que** l'organe (10) de verrouillage s'étend plus près du bord arrière(6) que d'un bord avant(4) de la paroi opposé au bord arrière (6).

2. Capot de véhicule selon la revendication 1 **caractérisé en ce que** l'organe de verrouillage s'étend à égale distance des deux bord latéraux (5,7) du capot (3).

3. Capot de véhicule selon la revendication 1 ou 2 **caractérisé en ce que** les moyens de liaison comprennent des charnières (A1).

4. Capot de véhicule selon l'une des revendications 1 à 3 **caractérisé en ce que** les moyens de liaison (20) comprennent des glissières (23,24).

5. Capot de véhicule selon l'une des revendications précédentes **caractérisé en ce qu'**il comporte des moyens de sécurisation (41,42) de la position fermée.

6. Capot de véhicule selon la revendication 5 **caractérisé en ce que** les moyens de sécurisation s'étendent plus près du bord avant (4) que du bord arrière (6) de la paroi.

7. Capot de véhicule selon la revendication 5 ou 6 **caractérisé en ce que** les moyens de sécurisation comportent un crochet (43) apte à venir s'engager dans le châssis (2).

8. Véhicule **caractérisé en ce qu'**il comprend un capot de véhicule selon l'une quelconque des revendications précédentes.

9. Véhicule comprenant un châssis (2) et un capot (3) comportant une paroi (40), des moyens de liaison (20) fixés à la paroi et au châssis pour rendre le capot mobile sur le châssis (2) et s'étendant plus près d'un même bord arrière (6) de la paroi que des autres bords (4,5,7) de la paroi, et un organe (10) de verrouillage fixé à la paroi en vue de verrouiller le capot en position fermée au châssis, **caractérisé en ce que** l'organe (10) de verrouillage s'étend plus près du bord arrière(6) que d'un bord avant(4) de la paroi opposé au bord arrière (6).

10. Véhicule selon la revendication 9 **caractérisé en ce que** l'organe de verrouillage comprend une serrure (12) apte à être liée au châssis.

11. Véhicule selon la revendication 9 ou 10 **caractérisé en ce que** l'organe de verrouillage comprend un câble de déverrouillage.

12. Véhicule selon l'une des revendications 9 à 11 **caractérisé en ce que** le capot est monté mobile au châssis selon un mouvement décomposable en une translation et une rotation.

13. Véhicule selon l'une des revendications 9 à 12 **caractérisé en ce que** le capot comporte au moins un pion (37) apte à venir coopérer avec un orifice ménagé dans un bossage (31) s'étendant en saillie d'une aile (32) du véhicule.

## Patentansprüche

1. Fahrzeugmotorhaube (3), die eine Wand (40), Verbindungsmittel (20), welche an der Wand befestigt sind, um die Motorhaube beweglich an einem Fahrzeugfahrgestell (2) zu montieren und welche sich näher zu einem hinteren Rand (6) der Wand als zu den anderen Rändern (4, 5, 7) der Wand erstrecken, sowie eine an der Wand befestigte Verriegelungsorgan (10) zur Verriegelung der Motorhaube mit dem Fahrgestell in geschlossener Position umfaßt, **dadurch gekennzeichnet, daß** sich die Verriegelungsorgan (10) näher zum hinteren Rand (6) als zu einem dem hinteren Rand (6) gegenüberliegenden vorderen Rand (4) der Wand erstreckt.

2. Fahrzeugmotorhaube nach Anspruch 1, **dadurch gekennzeichnet, daß** sich die Verriegelungsorgan im gleichen Abstand zu den beiden seitlichen Rändern (5, 7) der Motorhaube (3) erstreckt.

3. Fahrzeugmotorhaube nach Anspruch 1 oder 2, **dadurch gekennzeichnet, daß** die Verbindungsmittel Scharniere (A1) umfassen.

4. Fahrzeugmotorhaube nach einem der Ansprüche 1 bis 3, **dadurch gekennzeichnet, daß** die Verbindungsmittel (20) Führungsschienen (23, 24) umfassen.

5. Fahrzeugmotorhaube nach einem der vorstehenden Ansprüche, **dadurch gekennzeichnet, daß** sie Mittel zur Sicherung der geschlossenen Position (41, 42) umfaßt.

6. Fahrzeugmotorhaube nach Anspruch 5, **dadurch gekennzeichnet, daß** sich die Sicherungsmittel näher zum vorderen Rand (4) als zum hinteren Rand (6) der Wand erstrecken.

7. Fahrzeugmotorhaube nach Anspruch 5 oder 6, **dadurch gekennzeichnet, daß** die Sicherungsmittel einen Haken (43) umfassen, der so ausgelegt ist, daß er in das Fahrgestell (2) eingreift.

8. Fahrzeug, **dadurch gekennzeichnet, daß** es eine Fahrzeugmotorhaube nach einem der vorstehenden Ansprüche umfaßt.

9. Fahrzeug, das ein Fahrgestell (2) sowie eine Motorhaube (3) umfaßt, welche eine Wand (40), Verbindungsmittel (20), welche an der Wand und an dem Fahrgestell befestigt sind, so daß die Motorhaube bezüglich dem Fahrzeugfahrgestell (2) beweglich ist und welche sich näher zu einem hinteren Rand (6) der Wand als zu den anderen Rändern (4, 5, 7) der Wand erstrecken, sowie eine an der Wand befestigte Verriegelungsorgan (10) zur Verriegelung der Motorhaube mit dem Fahrgestell in geschlossener Position umfaßt, **dadurch gekennzeichnet, daß** sich die Verriegelungsorgan (10) näher zum hinteren Rand (6) als zu einem dem hinteren Rand (6) gegenüberliegenden vorderen Rand (4) der Wand erstreckt.

10. Fahrzeug nach Anspruch 9, **dadurch gekennzeichnet, daß** die Verriegelungsorgan ein Schloß (12) umfaßt, welches so ausgelegt ist, daß es mit dem Fahrgestell verbunden werden kann.

11. Fahrzeug nach Anspruch 9 oder 10, **dadurch gekennzeichnet, daß** die Verriegelungsorgan ein Entriegelungsseil umfaßt.

12. Fahrzeug nach einem der Ansprüche 9 bis 11, **dadurch gekennzeichnet, daß** die Motorhaube gemäß einer Bewegung, die in eine Translation und eine Rotation zerlegbar ist, am Fahrgestell beweglich montiert ist.

13. Fahrzeug nach einem der Ansprüche 9 bis 12, **dadurch gekennzeichnet, daß** die Motorhaube wenigstens einen Ausleger (37) umfaßt, der so ausgelegt ist, daß er mit einer Öffnung zusammenwirken kann, die in ein Auge (31) ausgespart ist, welche sich von einem Kotflügel (32) des Fahrzeugs vorspringend erstreckt.

## Claims

1. Vehicle bonnet (3) including a wall (40), connecting devices (20) for mounting the mobile hood on a vehicle chassis (2) fixed to the wall nearer a rear edge (6) of the wall than to its other edges (4, 5, 7), and a locking member (10) fixed to the wall for locking the hood to the chassis in a closed position, **characterized in that** the locking member (10) is nearer the rear edge (6) of the wall than a front edge (4) of the wall 10 opposite the rear edge (6).

2. Vehicle hood according to Claim 1, **characterized in that** the locking member is equidistant from two lateral edges (5, 7) of the hood (3).

3. Vehicle hood according to Claim 1 or Claim 2, 15 **characterized in that** the connecting devices include hinges (Al).

4. Vehicle hood according to any of Claims 1 to 3, **characterized in that** the connecting devices (20) include slides (23, 24).

5. Vehicle hood according to any preceding claim, **characterized in that** it includes a safety catch (41, 42) operative in its closed position.

6. Vehicle hood according to Claim 5, **characterized in that** the safety catch is nearer the front edge (4) of the wall than the rear edge (6) of the wail.

7. Vehicle hood according to Claim 5 or Claim 6, **characterized in that** the safety catch includes a hook (43) adapted to engage in the chassis (2).

8. Vehicle **characterized in that** it includes a vehicle hood according to any preceding claim.

9. Vehicle including a chassis (2) and a hood (3) having a wall (40), connecting devices (20) fixed to the wall and to the chassis so that the hood is mobile on the chassis (2) nearer a rear edge (6) of the wall than its other edges (4, 5, 7), and a locking member (10) fixed to the wall for locking the hood to the chassis in a closed position, **characterized in that** the locking member (10) is nearer the rear edge (6) of the wall than a front edge (4) of the wall opposite the rear edge (6).

10. Vehicle according to Claim 9, **characterized in that** the locking member includes a lock (12) adapted to be connected to the chassis.

11. Vehicle according to Claim 9 or Claim 10, **characterized in that** the locking member includes an unlocking cable.

12. Vehicle according to any of Claims 9 to 11, **characterized in that** the hood is mounted on the chassis so that it can rotate and move in translation.

13. Vehicle according to any of Claims 9 to 12, **characterized in that** the hood includes at least one bracket (37) adapted to cooperate with an orifice formed in a boss (31) projecting from a wing (32) of the vehicle.
